# EUROPEAN PATENT SPECIFICATION

(11) **EP 4 086 681 B1**
(45) Date of publication and mention of the grant of the patent: **02.07.2025**
(21) Application number: 22171170.8
(22) Date of filing: 02.05.2022
(51) Int. Cl.: G02B 6/44

(54) **AERIAL FIBER OPTIC CABLE**
FASEROPTISCHES LUFTKABEL
CÂBLE À FIBRE OPTIQUE AÉRIEN

(30) Priority: 06.05.2021 IT 202100011588
(43) Date of publication of application: 09.11.2022
(73) Proprietor: Prysmian S.p.A., 20126 Milano (IT)
(72) Inventor: SUTEHALL, Ralph, Bishopstoke, SO50 6YU (GB); SANTAMARIA, Susanna, Bishopstoke, SO50 6YU (GB)
(74) Representative: Cevini, Gaia

(56) References cited:
- US-A1- 2002 126 970

## Description

### Technical field

The present invention relates to the field of aerial fiber optic cables, In particular, the present invention relates to an aerial fiber optic cable for terrestrial networks, in particular - but not exclusively - optical access networks such as FTTx (Fiber To The x) networks, e.g. FTTH (Fiber To The Home) networks and FTTP (Fiber To The Premises) networks. The present invention also relates to a method of manufacturing such an aerial fiber optic cable.

### Background art

Nowadays, fiber optic cables are extensively used in access networks to provide connectivity to user premises. In an optical access network, such as a FTTx network (e.g., FTTH or FTTP), the majority of cables are aerial fiber optic cables, which are laid suspended between two poles or between a pole and a house. As known, aerial cables are subject to high tension loads due to a number of factors including the cable weight and the environmental conditions (ice, wind, etc.). As a result of wind and/or ice, in particular, the fiber optic cable is subject to dynamic loading conditions. These conditions cause the cable length to increase due to the increase in cable sag when the loading is applied, while the cable is reverted back to its original configuration when the loading ceases.

In aerial cable installations, typically, the optical fibers are terminated at each end of a span inside a joint closure. Therefore, the so-called "central loose tube cables" (briefly, CLT cables) are often used, as the optical fibers must be individually extracted from the cable and spliced. In a CLT cable, all the optical fibers of the cable are loosely arranged within a single buffer tube, which is in turn surrounded by a sheath. Besides, in a FTTH network, the cables typically have a low fibre count (e.g. up to 12 optical fibers), so that the choice of the CLT design make these cables cost effective.

With such type of cables, however, when the cable length increases due to ice and/or wind, the excess of the optical fiber(s) located within the joint closure is pulled into the span. When the loading ceases, the optical fiber(s) are unable to revert back to their original configuration due to the resistance of the gel within the loose tube. This situation would cause an increment in the optical fiber losses within the span due to micro-bending of the optical fiber(s).

To prevent the pulling of the optical fiber(s) into the span, a cable anchoring device can be used to secure the optical fibers against movement. For instance, the cable anchoring device may comprise a couple of bollards around which the cable may be wound to block the optical fiber(s). The device may be positioned close to the joint closure at each end of the span, which means that it may be positioned on a pole, in an underground chamber, in a street-side cabinet or on the wall of a house, at the customer premises.

WO 2007/113522 A1 discloses a method of protecting a weak point along a cable, the cable being subject to stress, comprising the steps of (i) selecting a section of the cable between a source of the strain and up to and including the weak point, (ii) using the section of the cable to form a cable configuration comprising a pair of coils, by - putting a twist in the cable by winding the cable in a first direction to form a first coil, and - taking the twist out of the cable by winding the cable in a second direction to form a second coil, and (iii) securing under tension the cable configuration formed.

EP 1557707 B1 discloses a method of installing an optical cable, which includes the steps of exposing a portion of the buffer tube over a predetermined length and forming the exposed portion of the buffer tube into a coupling coil.

EP 3 058 406 B1 discloses an optical fiber unit for air-blown installations comprising a plurality of optical fiber sub-units and a central member, wherein the optical fiber sub-units are stranded around the central member; wherein each of the optical fiber sub-units comprises a number of optical fibres, an inner layer which is radially outer to the optical fibres and an outer layer which is radially outer to the inner layer, wherein the outer layer comprises particulate material which is partially embedded into the outer layer; and wherein the optical fiber unit further comprises a binder for keeping the stranded optical fiber sub-units in a proper arrangement. The relatively high surface roughness of the outer layer reduces the friction between the optical fiber unit and the duct during the blowing procedure and increases the ability of the optical fiber unit to be entrained by the air blowing.

US 2002/126970 A1 discloses an optical fiber cable core including a buffer tube containing at least one optical fiber and reinforced by at least two substantially radially incompressible longitudinal strength members, each strength member having surface portions radially outermost with respect to the tube axis which are at or protrude from the exterior surface of the buffer tube. If the strength members protrude from the exterior surface of the buffer tube, less than 50%, and preferably less than 20%, of the outer surface of the strength members protrudes from the exterior surface of the buffer tube. The positions of the strength members can be readily determined, can be visible and can be easily removed from the buffer tube prior to slitting the buffer tube to achieve midspan access. The core can include a buffer tube having an inner tubular portion, an outer tubular portion including the strength members, and a release agent between the tubular portions to enable easy separation of the tubular portions so that conventional slitting tools can be used to gain midspan access.

### Summary of the invention

The inventors noticed that using a cable anchoring device comprising the bollards as described above (such as the device shown in Figures 7A, 7B and 8 of WO 2007/113522 A1) is not feasible when the aerial cable installation comprises more than one central loose tube cable branching off from the joint closure. In that case, indeed, using a number of such devices to anchor each cable with a respective pair of bollards would result in an excessively cumbersome arrangement.

In view of the above, the Applicant has tackled the problem of providing an aerial fiber optic cable for terrestrial networks, in particular, but not exclusively, FTTx, e.g., FTTH or FTTP, networks, which allows avoiding the fiber(s) to be pulled into the span in the presence of a load on the fiber optic cable while avoiding any cumbersome arrangement of cable anchoring devices. It is further to be noticed that avoiding using the cable anchoring devices described above would also result in a cheaper installation.

The inventors surprisingly found that the problem above may be solved in a particularly effective manner by using a fiber optic cable comprising an optical fiber unit in which the optical fibers are embedded into a resin and are firmly locked within the optical fiber unit. In other words, the optical fibers are tightly buffered in the optical fiber unit thanks to the presence of the resin among them. As a result, the movement of the optical fibers within the optical fiber unit is advantageously prevented. In particular, this also prevents the fibers from being pulled out of the optical fiber unit into the span in the presence of a load on the cable, without using any other device such as the bollards described above.

Moreover, the optical fiber unit of the fiber optic cable of the present invention comprises an outer layer with particulate material at an external boundary thereof (i.e., at the boundary of the outer layer which is radially farthest from the center of the cable), the particulate material forming, at the external boundary of the outer layer, a rough external surface which provides a grab surface for one or more strength members stranded around the optical fiber unit and/or a sheath (namely, a surface configured to grab one or more strength members stranded around the optical fiber unit and/or a sheath), so as to lock the optical fiber unit within the cable and prevent it from being pulled out of the cable. In other words, the outer layer of the optical fiber unit within the fiber optic cable of the present invention provides an unexpected high friction when enclosed by additional elements such as the one or more strength members and/or the sheath.

In the following description and in the claims, the expression "aerial fiber optic cable" will refer to a fiber optic cable used in aerial cable installations, namely suspended above the ground to form a span between two end points located on two poles, or a pole and a house, or two buildings or the like.

In one aspect, the present invention relates to an aerial fiber optic cable comprising an optical fiber unit, one or more strength members and a sheath, wherein the optical fiber unit comprises a number of optical fibers, an inner layer which is radially outer to the optical fibers and embeds the optical fibers and an outer layer which is radially outer to the inner layer, the outer layer comprising particulate material which is partially embedded into the outer layer, wherein the one or more strength members are arranged in a radial outer position with respect to said optical fiber unit, and wherein the sheath is extruded over the optical fiber unit and the one or more strength members.

In embodiments of the present invention, the optical fibers are thightly buffered in the optical fiber unit by the material of the inner layer, which fills the space among the optical fibers and prevents the movement of the optical fibers in the optical fiber unit.

In embodiments of the present invention, the outer layer is in direct contact with at least one of the strength members or the sheath. In particular, according to these embodiments of the present invention, the particulate material at least partially projects from the outer surface of the outer layer and hence it provides the outer layer with a rough external surface. This external surface is in direct contact with at least one of the strength members or the sheath. The rough external surface of the outer layer is configured to grab at least one of the strength members or the sheath.

According to an embodiment of the present invention, the aerial fiber optic cable comprises two strength members arranged within the thickness of the sheath. According to this embodiment, the two strength members are arranged at diametrically opposed positions embedded within the thickness of the sheath. Moreover, each strength member comprises a number of stranded metallic wires.

According to these embodiments of the present invention, the sheath has a substantially uniform outer diameter along its perimeter, said diameter being lower than 7 mm.

According to further embodiments, the aerial fiber optic cable comprises two strength members arranged at diametrically opposed positions with respect to the optical fiber unit and parallel thereto. According to these embodiments, the two strength members are glass reinforced plastic (GRP) strength members and have a diameter between 2 mm and 4 mm.

According to these embodiments, the aerial fiber optic cable is a flat fiber optic cable whose width is from 6 mm to 10 mm and thickness from 3 mm to 6 mm.

According to even further embodiments, the aerial fiber optic cable comprises a number of strength members arranged on a circumference radially outer to the outer layer of the optical fiber unit.

In particular, according to these embodiments, the strength members comprise multiple layers of aramid yarns with an overall thickness from 0.5 mm to 3 mm.

In the aerial fiber optic cables of the present invention the sheath is a polymeric sheath made of LSOH (Low Smoke Zero Halogen) or HDPE (High-Density Polyethylene) or glass filled polypropylene.

In another aspect, the present invention relates to a method of manufacturing an aerial fiber optic cable, the method comprising:
a) providing an optical fiber unit comprising a number of optical fibers, an inner layer which is radially outer to the optical fibers and embeds the optical fibers and an outer layer which is radially outer to the inner layer, the outer layer comprising particulate material which is partially embedded into the outer layer;
b) arranging one or more strength members in a radial outer position with respect to the optical fiber unit; and
c) extruding a sheath over the optical fiber unit and the one or more strength members.

In a further aspect, the present invention relates to a use of an optical fiber unit in an aerial fiber optic cable, the optical fiber unit comprising a number of optical fibers, an inner layer which is radially outer to the optical fibers and embeds the optical fibers and an outer layer which is radially outer to the inner layer, the outer layer comprising particulate material which is partially embedded into the outer layer, and wherein said aerial fiber optic cable comprises one or more strength members arranged in a radial outer position with respect to the optical fiber unit, and a sheath extruded over the optical fiber unit and the one or more strength members.

### Brief description of the drawings

Further characteristics and advantages will become more apparent by reading the following detailed description of an embodiment given as an example with reference to the accompanying drawings, wherein:
- Figure 1 schematically shows an aerial cable installation;
- Figure 2 schematically shows a cross section of an aerial fiber optic cable according to a first embodiment of the present invention;
- Figure 3 schematically shows a cross section of an optical fiber unit of an aerial fiber optic cable according to the present invention;
- Figure 4 schematically shows a cross section of an aerial fiber optic cable according to a second embodiment of the present invention; and
- Figure 5 schematically shows a cross section of an aerial fiber optic cable according to a third embodiment of the present invention.

### Detailed description of preferred embodiments of the invention

In the present description and claims, unless otherwise specified, all the numbers and values should be intended as preceded by the term "about". Also, all ranges include any combination of the maximum and minimum points disclosed and include any intermediate ranges therein, which may or may not be specifically enumerated herein.

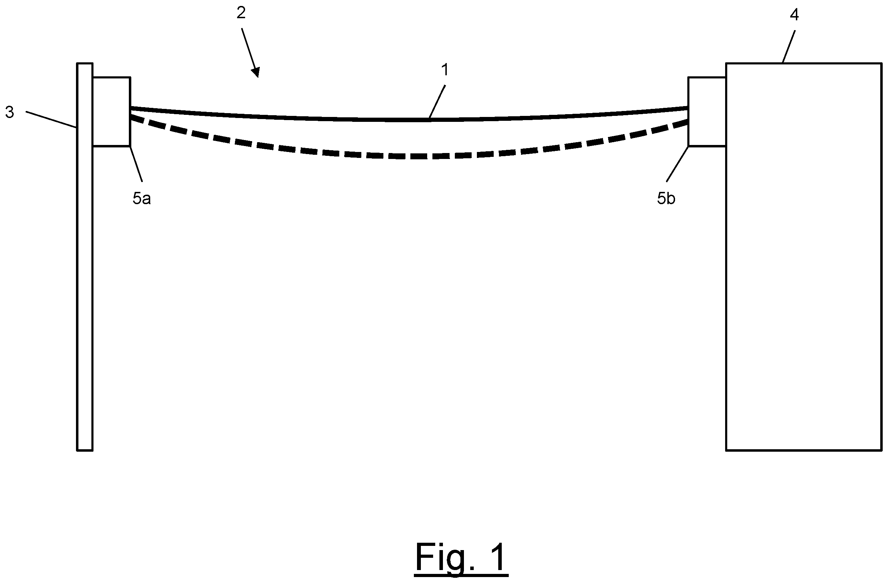

The fiber optic cable of the present invention is an aerial fiber optic cable for FFTx (e.g., FTTH or FTTP) applications. Figure 1 schematically shows an exemplary arrangement of a fiber optic cable 1 to form a span 2 of an optical access network. The span of Figure 1 extends from a pole 3 to a house 4. At each end of the span 2, a respective joint box or closure 5a, 5b is provided as mounted on the pole 3 and on the wall of the house 4. The continuous line illustrates the situation according to which the fiber optic cable 1 is under normal loading conditions (due to, e.g., its weight), while the dashed line illustrates the situation in which the fiber optic cable 1 is under wind and/or ice loading conditions causing the length of the span to increase.

The fiber optic cable according to the present invention comprises one or more optical fiber units, a number of strength members stranded around the optical fiber unit(s) and a sheath, which is extruded over the optical fiber unit(s) and the strength members.

In the embodiments schematically shown in the Figures, the aerial fiber optic cable comprises, for sake of example, a single optical fiber unit. The optical fiber unit has an outer layer comprising particulate material partially embedded therein at an external boundary thereof (i.e., at the boundary of the outer layer which is farthest from the center of the optical fiber unit). The optical fiber unit, in particular, its outer layer, is hence provided with a rough external surface. According to the claimed invention, the optical fiber unit, the external surface of the outer layer, is in direct contact with at least one of the strength members and the sheath and is configured to grab the at least one of the strength members and the sheath to lock the optical fiber unit within the cable.

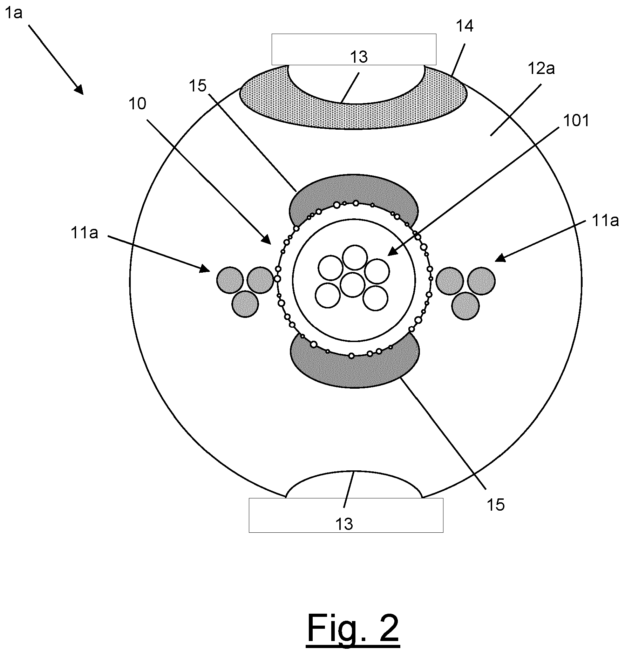

Figure 2 shows a fiber optic cable 1a according to a first embodiment of the present invention.

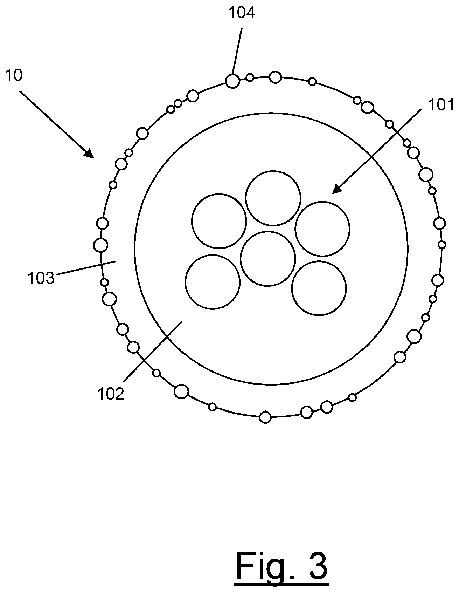

The optical fiber unit 10 is schematically shown in greater detail in Figure 3. In particular, Figure 3 represents a schematic cross-section of the optical fiber unit 10 according to the present invention.

The optical fiber unit 10 comprises a number of optical fibers 101, an inner layer 102, which is radially outer to the optical fibers 101 and embeds the optical fibers 101, and an outer layer 103 which is radially outer to the inner layer 102. The outer layer 103 comprises particulate material 104 which is partially embedded into the outer layer 103 at an external boundary thereof.

The term "optical fiber" is meant to indicate an optical glass core surrounded by a glass cladding and a coating system comprising one or two layers of cured resins, for example acrylate resins, optionally provided with a coloured ink layer. The optical fibers may be single mode or multimode optical fibers with a nominal diameter between about 180 µm and 250 µm. Relative to each other, the optical fibers may have a length difference of less than about 0.03 %.

The optical fiber unit 10 of the example of Figures 2 and 3 comprises six optical fibers 101. In other examples (not shown), there are provided more than six optical fibers. In other examples (not shown), there are provided less than six optical fibers. In other examples (not shown), the optical fiber unit comprises a single optical fiber. The weight of the optical fiber unit 10 may range between 0.8 g/m with 2 optical fibers to 2.0 g/m with twelve optical fibers.

Particulate material 104 can be selected among beads of glass, of ceramic, of polytetrafluoroethylene (PTFE) or of high-density polyethylene (HDPE). The beads can be either hollow or solid. The beads may have a diameter of from 0.070 mm to 0.150 mm. The beads at least partially project from the outer surface of the outer layer 103 of the optical fiber unit 10.

The particle material coverage - i.e., the number of beads per unit surface area of the product - in the optical fiber unit 10 can be of from 15 to 35 beads/mm².

The embedding is the amount of sinking of the particles into the outer layer 103, expressed as percentage of the particle dimension which is embedded into the outer layer. According to examples of the invention, the embedding of the particle material is of from 20% to 70%, in particular from 20% to 60%.

As said above, inner layer 102 is arranged radially outer to the optical fibers 101 and embeds them. In other words, the optical fibers 101 are tightly buffered in the optical fiber unit by the material of the inner layer 102, which fills the space among the optical fibers 101 and prevents the movement of the optical fibers 101 in the optical fiber unit. Profitably, the inner layer 102 comprises a layer of cured resin such as, for instance, acrylate resin. The diameter of inner layer 102 could be in a range between 0.6 mm and 1.3 mm, in particular between 0.8 mm and 1.2 mm. Example of a material for the inner layer 102 is Cabelite 3287-9-39A from DSM Desotech.

Outer layer 103 is radially outer to the inner layer 102. Profitably, outer layer 103 comprises a layer of cured resin such as, for instance, acrylate resin. The outer diameter of outer layer 103 could be in a range between 0.7 mm and 2 mm, in particular between 1.0 mm and 1.4 mm. Outer layer 103 is generally harder than inner layer 102. According to embodiments of the present invention, the modulus of elasticity of the outer layer 103 is higher than the modulus of elasticity of the inner layer 102. Example of a material for the outer layer 103 is Cabelite 3287-9-75 from DSM Desotech.

According to the first embodiment of the present invention, the exemplary fiber optic cable 1a of Figure 2 comprises two strength members 11a arranged within the thickness of the sheath 12a. In the particular embodiment of Figure 2, the two strength members 11a are arranged at diametrically opposed positions, embedded within the thickness of the sheath 12a. For instance, each strength member 11a comprises a number of (three, in the embodiment of Figure 2) stranded metallic wires, e.g., coated steel wires, or stranded non-metallic yarns, e.g. aramid yarns. Yarns. For example, the strength member 11a comprises a number of stranded steel wires having a diameter of about 1 mm each.

In some embodiments (as, for example, in the embodiment shown in Figure 2) the strength members 11a are arranged substantially parallel to the optical fiber unit 10.

The sheath 12a is a polymeric sheath which is extruded over the optical fiber unit 10 and the strength members 11a. The sheath 12a is made of, for example, LSOH (Low Smoke Zero Halogen) or HDPE (High-Density Polyethylene) or glass filled polypropylene. The sheath 12a has a substantially uniform thickness along its perimeter. In particular, the sheath 12a may have a substantially uniform outer diameter along its perimeter. The outer diameter of the sheath 12a is for instance lower than 7 mm, in some embodiments lower than 6 mm, in further embodiments between 7 mm and 4 mm.

According to the embodiment shown in Figure 2, the sheath 12a comprises two grooves (or notches) 13 placed at substantially diametrically opposed positions. The grooves 13 have, for example, a blunt profile. Furthermore, the groove depth can be, for example, substantially equal to 0.6 mm. This way, even when the cable 1 is bent or twisted e.g., during installation, the presence of the grooves 13 does not impair the sheath integrity. As shown in Figure 2, at least one of the grooves 13 is optionally provided with an identification stripe 14 and/or ink-jet printed identification codes allowing identification of the cable 1. The bisector of the grooves 13 may be arranged on a longitudinal plane perpendicular to the longitudinal plane containing the strength members 11a.

The fiber optic cable 1a also comprises two optional ripcords 15 arranged between the optical fiber unit 10 and the sheath 12a. The ripcords 15 may be aligned with the grooves 13. Each ripcord 15 is made, for example, of non-metallic yarns, e.g., aramid yarns or polyester yarns.

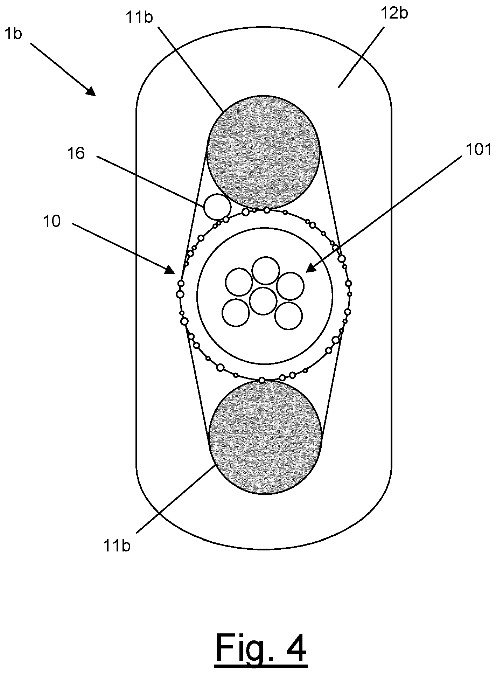

Figure 4 shows a fiber optic cable 1b according to a second embodiment of the present invention. According to this embodiment, the fiber optic cable 1b is a flat fiber optic cable.

The fiber optic cable 1b comprises an optical fiber unit 10 with optical fibers 101, as already described with reference to the first embodiment of the present invention.

Moreover, the exemplary fiber optic cable 1b comprises two strength members 11b arranged at diametrically opposed positions with respect to the optical fiber unit 10 and parallel to it. The two strength members 11b may be glass reinforced plastic (GRP) strength members. In some examples, the strength members 11b are made of GRP and have a diameter between 2 mm and 4 mm.

Furthermore, the fiber optic cable 1b preferably comprises a ripcord 16.

The fiber optic cable 1b then comprises a polymeric sheath 12b. The sheath 12b is extruded over the optical fiber unit 10, the strength members 11b and the ripcord 16 and it is made of, for example, LSOH (Low Smoke Zero Halogen) or HDPE (High-Density Polyethylene) or glass filled polypropylene. In this case, the sheath 12b does not embed the strength members 11b. In particular, the sheath 12b surrounds the optical fiber unit 10, the strength members 11b and the ripcord 16. Furthermore, it may have a substantially uniform thickness along its perimeter. According to this embodiment, the fiber optic cable 1b may have width from 6 mm to 10 mm and thickness from 3 mm to 6 mm. In some embodiments, the fiber optic cable 1b has a width between 7.5 mm and 8.5 mm and a thickness between 3.5 and 4.5 mm.

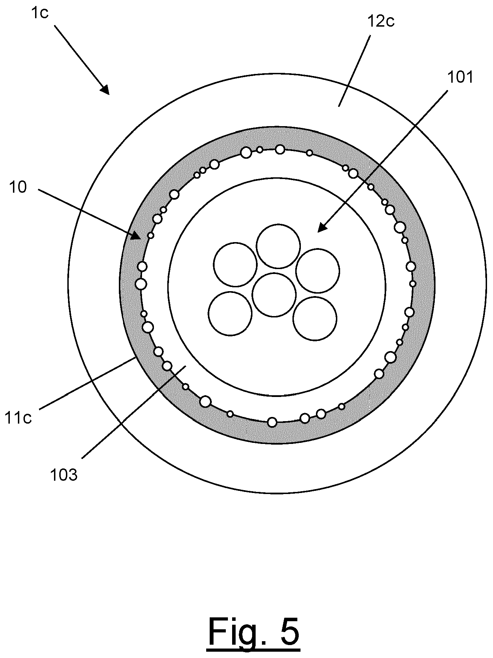

Figure 5 shows a fiber optic cable 1c according to a third embodiment of the present invention.

The fiber optic cable 1c comprises an optical fiber unit 10 with optical fibers 101, as already described with reference to the first embodiment of the present invention.

Moreover, the exemplary fiber optic cable 1c comprises a number of strength members 11c arranged on a circumference radially outer to the outer layer 103 of the optical fiber unit 10. The strength members 11c are stranded around the optical fiber unit 10. In particular, the strength members 11c are filamentary aramid yarns stranded around the optical fiber unit 10 and possibly arranged in multiple layers. In some embodiments, the overall thickness of the multiple layers of filamentary aramid yarns can be comprised between 0.5 mm to 3 mm. In some examples, the strength members 11c comprise multiple layers of 1610 dtex aramid yarns.

The fiber optic cable 1c then comprises a polymeric sheath 12c. The sheath 12c is extruded over the optical fiber unit 10 and the strength members 14c in a radially outer position thereto, and it is made of, for example, LSOH (Low Smoke Zero Halogen) or HDPE (High-Density Polyethylene) or glass filled polypropylene. The sheath 12c has a substantially uniform thickness along its perimeter. In particular, the sheath 12c may have a substantially uniform outer diameter along its perimeter. The outer diameter of the sheath 12c is e.g., lower than 7 mm, in some embodiments lower than 6 mm, in further embodiments between 7 mm and 4 mm.

According to the embodiments of the present invention as described herein above, when the strength members and/or the sheath are placed in direct contact with the optical fiber unit, they are grabbed by the rough surface provided by the particulate material partially embedded in the outer layer of the optical fiber unit. Indeed, as mentioned above, a high static friction is provided between the particulate material and the strength members and/or the sheath in direct contact with the rough surface. This effectively locks the optical fiber unit and the strength members and/or the sheath together. The optical fiber unit is then effectively locked within the cable due to the interaction of the rough surface and the strength members.

The advantage of using the optical fiber unit with the particulate material in the outer layer rather than using, e.g., a glue between the optical fiber unit and the strength members is that it is easier to remove the sheath and strength members when the fiber optic cable is to be punt into a joint.

It is to be noticed that the description above has been made with reference to an exemplary cable comprising a single optical fiber unit. This is not limiting since two or more optical fiber units of the same type as described above may be used in aerial fiber optic cables having similar features (e.g. strength members, polymeric sheath) as those detailed above.

The present invention also provides a method of manufacturing an aerial fiber optic cable, which comprises the following steps:
- providing an optical fiber unit comprising a number of optical fibers, an inner layer which is radially outer to the optical fibers and embeds the optical fibers and an outer layer which is radially outer to the inner layer, the outer layer comprising particulate material which is partially embedded into the outer layer;
- arranging one or more strength members around the optical fiber unit; and
- extruding a sheath over the optical fiber unit and the one or more strength members.

As apparent from the description above, the present invention provides for blocking the optical fiber(s) in an aerial fiber optic cable by avoiding to use CLT cables and by using instead optical fiber unit(s) in which the fibers are immersed in a resin, which effectively keeps them firmly in position within the cable. As a result, the cable of the present invention allows avoiding any movement of the fibers that are locked within the optical fiber unit. Moreover, also the optical fiber unit is locked within the cable thanks to the interaction between the rough surface of the optical fiber unit and the strength members.

It follows that the present invention also allows avoiding using cumbersome cable anchoring devices such as a pair of bollards. As a result, the method of the present invention can be applied to prevent the excess of the optical fiber(s) from being pulled in the span in aerial cable installations also comprising a bunch of fiber optic cables. Moreover, it also results in a reduction of costs as compared to using cable anchoring devices such as those described above.

## Claims

1. An aerial fiber optic cable (1a; 1b; 1c) comprising an optical fiber unit (10), one or more strength members (11a; 11b; 11c) and a sheath (12a; 12b; 12c), wherein
said optical fiber unit (10) comprises a number of optical fibers (101), an inner layer (102), which is radially outer to the optical fibers and embeds the optical fibers (101), and an outer layer (103) which is radially outer to the inner layer (102), the outer layer (103) comprising particulate material (104) which is partially embedded into the outer layer (103),
said one or more strength members (11a; 11b; 11c) are arranged in a radial outer position with respect to said optical fiber unit (10), said sheath (12a; 12b; 12c) is extruded over said optical fiber unit (10) and said one or more strength members (11a; 11b; 11c), and **characterised in that** the particulate material (104) provides the outer layer (103) with a rough external surface, and said external surface is in direct contact with at least one of the strength members (11a; 11b; 11c) or the sheath (12a; 12b; 12c) and provides a grab surface for at least one of the strength members (11a; 11b; 11c) or the sheath (12a; 12b; 12c).

2. The aerial fiber optic cable (1) according to claim 1, wherein it comprises two strength members (11a) arranged within the thickness of the sheath (12a).

3. The aerial fiber optic cable (1) according to claim 2, wherein the two strength members (11a) are arranged at diametrically opposed positions embedded within the thickness of the sheath (12a).

4. The aerial fiber optic cable (1) according to claim 2 or 3, wherein each strength member (11a) comprises a number of stranded metallic wires.

5. The aerial fiber optic cable (1) according to any of the preceding claims, wherein the sheath (12a) has a substantially uniform outer diameter along its perimeter, said diameter being lower than 7 mm.

6. The aerial fiber optic cable (1) according to claim 1, wherein it comprises two strength members (11b) arranged at diametrically opposed positions with respect to said optical fiber unit (10) and parallel thereto.

7. The aerial fiber optic cable (1) according to claim 6, wherein the two strength members (11b) are glass reinforced plastic (GRP) strength members.

8. The aerial fiber optic cable (1) according to claim 6 or 7, wherein the two strength members (11b) have a diameter between 2 mm and 4 mm.

9. The aerial fiber optic cable (1) according to any of claims 6-8, wherein said cable is a flat fiber optic cable whose width is from 6 mm to 10 mm and thickness from 3 mm to 6 mm.

10. The aerial fiber optic cable (1) according to claim 1, wherein it comprises a number of strength members (11c) arranged on a circumference radially outer to the outer layer (103) of the optical fiber unit (10).

11. The aerial fiber optic cable (1) according to claim 10, wherein said strength members (11c) comprise multiple layers of aramid yarns with an overall thickness from 0.5 mm to 3 mm.

12. The aerial fiber optic cable (1) according any of the preceding claims, wherein the sheath (12a; 12b; 12c) is made of LSOH (Low Smoke Zero Halogen) or HDPE (High-Density Polyethylene) or glass filled polypropylene.

13. A method of manufacturing an aerial fiber optic cable (1a; 1b; 1c), the method comprising:
a) providing an optical fiber unit (10) comprising a number of optical fibers (101), an inner layer (102), which is radially outer to the optical fibers (101) and embeds the optical fibers (101), and an outer layer (103) which is radially outer to the inner layer (102), the outer layer (103) comprising particulate material (104) which is partially embedded into the outer layer (103);
b) arranging one or more strength members (11a; 11b; 11c) in a radial outer position with respect to the optical fiber unit (10); and
c) extruding a sheath (12a; 12b; 12c) over the optical fiber unit (10) and the one or more strength members (11a; 11b; 11c), **characterised in that** the particulate material (104) provides the outer layer (103) with a rough external surface, and said external surface is in direct contact with at least one of the strength members (11a; 11b; 11c) or the sheath (12a; 12b; 12c) and provides a grab surface for at least one of the strength members (11a; 11b; 11c) or the sheath (12a; 12b; 12c).

14. Use of an optical fiber unit (10) in an aerial fiber optic cable (1a; 1b; 1c), the optical fiber unit (10) comprising a number of optical fibers (101), an inner layer (102), which is radially outer to the optical fibers (101) and embeds the optical fibers (101), and an outer layer (103) which is radially outer to the inner layer (102), the outer layer (103) comprising particulate material (104) which is partially embedded into the outer layer (103), wherein said aerial fiber optic cable (1a; 1b; 1c) comprises one or more strength members (11a; 11b; 11c) arranged in a radial outer position with respect to said optical fiber unit (10), and a sheath (12a; 12b; 12c) extruded over said optical fiber unit (10) and said one or more strength members (11a; 11b; 11c), and **characterised in that** the particulate material (104) provides the outer layer (103) with a rough external surface, and said external surface is in direct contact with at least one of the strength members (11a; 11b; 11c) or the sheath (12a; 12b; 12c) and provides a grab surface for at least one of the strength members (11a; 11b; 11c) or the sheath (12a; 12b; 12c).

## Patentansprüche

1. Faseroptisches Luftkabel (1a; 1b; 1c) mit einer optischen Fasereinheit (10), einem oder mehreren Festigkeitselementen (11a; 11b; 11c) und einer Hülle (12a; 12b; 12c), wobei
die optische Fasereinheit (10) eine Anzahl von optischen Fasern (101), eine innere Schicht (102), die radial außerhalb der optischen Fasern liegt und die optischen Fasern (101) einbettet, und eine äußere Schicht (103), die radial außerhalb der inneren Schicht (102) liegt, umfasst, wobei die äußere Schicht (103) partikelförmiges Material (104) umfasst, das teilweise in die äußere Schicht (103) eingebettet ist,
das eine oder die mehreren Verstärkungselemente (11a; 11b; 11c) in einer radial äußeren Position in Bezug auf die optische Fasereinheit (10) angeordnet sind,
die Hülle (12a; 12b; 12c) über die optische Fasereinheit (10) und das eine oder die mehreren Festigkeitselemente (11a; 11b; 11c) extrudiert ist, und **dadurch gekennzeichnet, dass**
das partikelförmige Material (104) die äußere Schicht (103) mit einer rauen Außenfläche versieht und die Außenfläche in direktem Kontakt mit mindestens einem der Festigkeitselemente (11a; 11b; 11c) oder der Hülle (12a; 12b; 12c) steht und eine Greiffläche für mindestens eines der Festigkeitselemente (11a; 11b; 11c) oder die Hülle (12a; 12b; 12c) bildet.

2. Faseroptisches Luftkabel (1) nach Anspruch 1, **dadurch gekennzeichnet, dass** es zwei Festigkeitselemente (11a) umfasst, die innerhalb der Dicke der Hülle (12a) angeordnet sind.

3. Faseroptisches Luftkabel (1) nach Anspruch 2, bei dem die beiden Festigkeitselemente (11a) an diametral gegenüberliegenden Positionen angeordnet sind, die in die Dicke der Hülle (12a) eingebettet sind.

4. Faseroptisches Luftkabel (1) nach Anspruch 2 oder 3, wobei jedes Festigkeitselement (11a) eine Anzahl von Metalllitzen umfasst.

5. Faseroptisches Luftkabel (1) nach einem der vorhergehenden Ansprüche, wobei die Hülle (12a) entlang seines Umfangs einen im Wesentlichen gleichmäßigen Außendurchmesser aufweist, der kleiner als 7 mm ist.

6. Faseroptisches Luftkabel (1) nach Anspruch 1, **dadurch gekennzeichnet, dass** es zwei Festigkeitselemente (11b) umfasst, die an diametral gegenüberliegenden Positionen in Bezug auf die optische Fasereinheit (10) und parallel zu dieser angeordnet sind.

7. Faseroptisches Luftkabel (1) nach Anspruch 6, wobei die beiden Festigkeitselemente (11b) aus glasfaserverstärktem Kunststoff (GFK) bestehen.

8. Faseroptisches Luftkabel (1) nach Anspruch 6 oder 7, wobei die beiden Festigkeitselemente (11b) einen Durchmesser zwischen 2 mm und 4 mm aufweisen.

9. Faseroptisches Luftkabel (1) nach einem der Ansprüche 6-8, wobei das Kabel ein flaches faseroptisches Kabel mit einer Breite von 6 mm bis 10 mm und einer Dicke von 3 mm bis 6 mm ist.

10. Faseroptisches Luftkabel (1) nach Anspruch 1, **dadurch gekennzeichnet, dass** es eine Anzahl von Festigkeitselementen (11c) umfasst, die an einem Umfang radial außerhalb der äußeren Schicht (103) der optischen Fasereinheit (10) angeordnet sind.

11. Faseroptisches Luftkabel (1) nach Anspruch 10, wobei die Festigkeitselemente (11c) mehrere Schichten aus Aramidgarnen mit einer Gesamtdicke von 0,5 mm bis 3 mm umfassen.

12. Das faseroptische Luftkabel (1) nach einem der vorhergehenden Ansprüche, wobei die Hülle (12a; 12b; 12c) aus LSOH (Low Smoke Zero Halogen) oder HDPE (High-Density Polyethylene) oder glasgefülltem Polypropylen hergestellt ist.

13. Verfahren zur Herstellung eines faseroptischen Luftkabels (1a; 1b; 1c) wobei das Verfahren umfasst:
a) Bereitstellen einer optischen Fasereinheit (10), die eine Anzahl optischer Fasern (101), eine innere Schicht (102), die sich radial außerhalb der optischen Fasern (101) befindet und die optischen Fasern (101) einbettet, und eine äußere Schicht (103), die sich radial außerhalb der inneren Schicht (102) befindet, umfasst, wobei die äußere Schicht (103) teilchenförmiges Material (104) umfasst, das teilweise in die äußere Schicht (103) eingebettet ist;
b) Anordnen eines oder mehrerer Festigkeitselemente (11a, 11b; 11c) in einer radial äußeren Position in Bezug auf die optische Fasereinheit (10);
und
c) Extrudieren der Hülle (12a; 12b; 12c) über die optische Fasereinheit (10) und das eine oder die mehreren Festigkeitselemente (11a; 11b; 11c),
**dadurch gekennzeichnet, dass**
das partikelförmige Material (104) die äußere Schicht (103) mit einer rauen Außenfläche versieht und diese Außenfläche in direktem Kontakt mit mindestens einem der Festigkeitselemente (11a; 11b; 11c) oder der Hülle (12a; 12b; 12c) steht und eine Greiffläche für mindestens eines der Festigkeitselemente (11a; 11b; 11c) oder die Hülle (12a; 12b; 12c) bildet.

14. Verwendung einer optischen Fasereinheit (10) in einem faseroptischen Luftkabel (1a; 1b; 1c), wobei die optische Fasereinheit (10) eine Anzahl von optischen Fasern (101), eine innere Schicht (102), die sich radial außerhalb der optischen Fasern (101) befindet und die optischen Fasern (101) einbettet, und eine äußere Schicht (103), die sich radial außerhalb der inneren Schicht (102) befindet, umfasst, wobei die äußere Schicht (103) partikelförmiges Material (104) umfasst, das teilweise in die äußere Schicht (103) eingebettet ist, wobei das faseroptische Luftkabel (1a; 1b; 1c) ein oder mehrere Verstärkungselemente (11a; 11b; 11c), die in einer radialen äußeren Position in Bezug auf die optische Fasereinheit (10) angeordnet sind, und eine Hülle (12a; 12b; 12c), die über die optische Fasereinheit (10) und das eine oder die mehreren Festigkeitselemente (11a; 11b; 11a; 11b; 11c) extrudiert ist, und **dadurch gekennzeichnet, dass** das teilchenförmige Material (104) die äußere Schicht (103) mit einer rauen äußeren Oberfläche versieht, und die äußere Oberfläche in direktem Kontakt mit mindestens einem der Festigkeitselemente (11a; 11b; 11c) oder der Hülle (12a; 12b; 12c) steht und eine Greifoberfläche für mindestens eines der Festigkeitselemente (11a; 11b; 11c) oder die Hülle (12a; 12b; 12c) bereitstellt.

## Revendications

1. Câble à fibres optiques aérien (1a ; 1b ; 1c) comprenant une unité de fibres optiques (10), un ou plusieurs éléments de résistance (11a ; 11b ; 11c) et une gaine (12a ; 12b ; 12c), dans lequel
ladite unité de fibres optiques (10) comprend un certain nombre de fibres optiques (101), une couche interne (102), qui est radialement externe aux fibres optiques et incorpore les fibres optiques (101), et une couche externe (103) qui est radialement externe à la couche interne (102), la couche externe (103) comprenant un matériau particulaire (104) qui est partiellement incorporé dans la couche externe (103),
lesdits un ou plusieurs éléments de résistance (11a ; 11b ; 11c) sont agencés dans une position externe radiale par rapport à ladite unité de fibres optiques (10),
ladite gaine (12a ; 12b ; 12c) est extrudée sur ladite unité de fibres optiques (10) et lesdits un ou plusieurs éléments de résistance (11a ; 11b ; 11c),
et **caractérisé en ce que**
le matériau particulaire (104) dote la couche externe (103) d'une surface externe rugueuse, et ladite surface externe est en contact direct avec au moins l'un des éléments de résistance (11a ; 11b ; 11c) ou la gaine (12a ; 12b ; 12c) et fournit une surface de préhension pour au moins l'un des éléments de résistance (11a ; 11b ; 11c) ou la gaine (12a ; 12b ; 12c).

2. Câble à fibres optiques aérien (1) selon la revendication 1, dans lequel il comprend deux éléments de résistance (11a) agencés dans l'épaisseur de la gaine (12a).

3. Câble à fibres optiques aérien (1) selon la revendication 2, dans lequel les deux éléments de résistance (11a) sont agencés au niveau de positions diamétralement opposées intégrées dans l'épaisseur de la gaine (12a).

4. Câble à fibres optiques aérien (1) selon la revendication 2 ou 3, dans lequel chaque élément de résistance (11a) comprend un certain nombre de fils métalliques multibrins.

5. Câble à fibres optiques aérien (1) selon l'une quelconque des revendications précédentes, dans lequel la gaine (12a) présente un diamètre externe sensiblement uniforme le long de son périmètre, ledit diamètre étant inférieur à 7 mm.

6. Câble à fibres optiques aérien (1) selon la revendication 1, dans lequel il comprend deux éléments de résistance (11b) agencés au niveau de positions diamétralement opposées par rapport à ladite unité de fibres optiques (10) et parallèles à celle-ci.

7. Câble à fibres optiques aérien (1) selon la revendication 6, dans lequel les deux éléments de résistance (11b) sont des éléments de résistance en plastique renforcé de verre (PRFV).

8. Câble à fibres optiques aérien (1) selon la revendication 6 ou 7, dans lequel les deux éléments de résistance (11b) présentent un diamètre compris entre 2 mm et 4 mm.

9. Câble à fibres optiques aérien (1) selon l'une quelconque des revendications 6 à 8, dans lequel ledit câble est un câble à fibres optiques plat dont la largeur est de 6 mm à 10 mm et l'épaisseur de 3 mm à 6 mm.

10. Câble à fibres optiques aérien (1) selon la revendication 1, dans lequel il comprend un certain nombre d'éléments de résistance (11c) agencés sur une circonférence radialement externe à la couche externe (103) de l'unité de fibres optiques (10),

11. Câble à fibres optiques aérien (1) selon la revendication 10, dans lequel lesdits éléments de résistance (11c) comprennent plusieurs couches de fils aramide d'une épaisseur totale de 0,5 mm à 3 mm.

12. Câble à fibres optiques aérien (1) selon l'une quelconque des revendications précédentes, dans lequel la gaine (12a ; 12b ; 12c) est composée de LSOH (faible émission de fumée zéro halogène) ou HDPE (polyéthylène haute densité) ou de polypropylène rempli de verre.

13. Procédé de fabrication d'un câble à fibres optiques aérien (1a ; 1b ; 1c), le procédé comprenant :
a) la fourniture d'une unité de fibres optiques (10) comprenant un certain nombre de fibres optiques (101), d'une couche interne (102), qui est radialement externe aux fibres optiques (101) et incorpore les fibres optiques (101), et d'une couche externe (103) qui est radialement externe à la couche interne (102), la couche externe (103) comprenant un matériau particulaire (104) qui est partiellement incorporé dans la couche externe (103) ;
b) l'agencement d'un ou de plusieurs éléments de résistance (11a ; 11b ; 11c) dans une position externe radiale par rapport à l'unité de fibres optiques (10) ; et
c) l'extrusion d'une gaine (12a ; 12b ; 12c) sur l'unité de fibres optiques (10) et le ou les éléments de résistance (11a ; 11b ; 11c),
**caractérisé en ce que**
le matériau particulaire (104) dote la couche externe (103) d'une surface externe rugueuse, et ladite surface externe est en contact direct avec au moins l'un des éléments de résistance (11a ; 11b ; 11c) ou la gaine (12a ; 12b ; 12c) et fournit une surface de préhension pour au moins l'un des éléments de résistance (11a ; 11b ; 11c) ou la gaine (12a ; 12b ; 12c).

14. Utilisation d'une unité de fibres optiques (10) dans un câble de fibres optiques aérien (1a ; 1b ; 1c), l'unité de fibres optiques (10) comprenant un certain nombre de fibres optiques (101), une couche interne (102), qui est radialement externe aux fibres optiques (101) et incorpore les fibres optiques (101), et une couche externe (103) qui est radialement externe à la couche interne (102), la couche externe (103) comprenant un matériau particulaire (104) qui est partiellement incorporé dans la couche externe (103), dans lequel ledit câble de fibres optiques aérien (1a ; 1b ; 1c) comprend un ou plusieurs éléments de résistance (11a ; 11b ; 11c) agencés dans une position externe radiale par rapport à ladite unité de fibres optiques (10), et une gaine (12a ; 12b ; 12c) extrudée sur ladite unité de fibres optiques (10) et lesdits un ou plusieurs éléments de résistance (11a ; 11b ; 11c), et **caractérisée en ce que**
le matériau particulaire (104) dote la couche externe (103) d'une surface externe rugueuse, et ladite surface externe est en contact direct avec au moins l'un des éléments de résistance (11a ; 11b ; 11c) ou la gaine (12a ; 12b ; 12c) et fournit une surface de préhension pour au moins l'un des éléments de résistance (11a ; 11b ; 11c) ou la gaine (12a ; 12b ; 12c).
